# EUROPEAN PATENT APPLICATION

(11) **EP 2 403 246 A2**
(43) Date of publication of application: **04.01.2012**
(21) Application number: 10746461.2
(22) Date of filing: 26.02.2010
(51) Int. Cl.: H04N 7/173, G06Q 50/00

(54) **ARCHITECTURE OF A NETWORK DEVICE FOR PROCESSING APPLICATIONS, AND CONTROL METHOD FOR THE NETWORK DEVICE**

(30) Priority: 27.02.2009 US 155921 P
(71) Applicant: LG Electronics Inc., Seoul 150-721 (KR)
(72) Inventor: LEE, Joon Hui, Seoul 137-724 (KR); KIM, Byung Yong, Seoul 137-724 (KR); SON, Jeong Sik, Seoul 137-724 (KR); LIM, Mee Kyung, Seoul 137-724 (KR)
(74) Representative: Gunzelmann, Rainer
(86) International application number: PCT/KR2010/001238
(87) International publication number: WO 2010/098622

(57) **Abstract**

The present invention relates to an add-on architecture which can be applied to a network device. A network device for processing at least one or more applications, according to one embodiment of the present invention, comprises: a host S/W processing module which receives a key event for executing a specific command, and transmits the received key event to an add-on system manager, said add-on system manager which checks a focused specific application from among one or more applications currently being executed, and which transmits the received key event to the focused specific application; and an add-on application which processes the received key event.

## Description

### Field of the Invention

The present invention relates to a device and method for executing applications and contents in a network device.

Most particularly, the present invention relates to an Add-on Architecture for processing additional applications in a network device and a method for controlling the network device.

### Background Art

Recently, network devices having bi-directional (or two-way) characteristics and using IP (Internet Protocol) have been in active development. Such devices are already equipped with Built-in Applications at the point of their release to the market. However, such applications are configured based upon an API (Application Programming Interface), which is provided by the manufacturer of each device. Therefore, such devices are not compatible with other diverse applications provided through the Internet. Accordingly, there lies a problem in that it is difficult to add applications other than the Built-in Applications.

### Detailed Description of the Invention

### Technical Objects

According to the embodiment of the present invention, in order to resolve the problems and disadvantages of the above-described related art network device, the present invention proposes an architecture of a network device and a method for controlling the network device, wherein the network device is equipped with scalability and flexibility that can operate (or execute) applications and contents configured in formats other than those of the Built-in Applications by using the bi-directional (or two-way) characteristics of the network device.

### Technical Solutions

In order to achieve the technical objects of the present invention, according to an aspect of the present invention, a network device processing at least one or more applications includes a host S/W processing module configured to receive a key-event for executing a specific command and to optionally transmit the received key-event to an add-on system manager, an add-on system manager configured to verify a specific application that is focused among at least one or more currently executable applications, and to transmit the received key-event to the focused specific application, and an add-on application configured to process the received key-event.

According to another embodiment of the present invention, a method for controlling the network device processing at least one or more applications includes the steps of transmitting a signal requesting for an authentication of the network device to a server, receiving an identification signal identifying a confirmed authentication or a non-confirmed authentication of the network device from the server, when the identification signal corresponds to a signal confirming the authentication of the network device, downloading an application from the server, receiving a specific key-event for executing executing a specific command, and optionally transmitting the received key-event to an add-on system manager, and verifying a focused specific application, among at least one or more of currently executable applications, and transmitting the received key-event to the focused specific application.

According to yet another embodiment of the present invention, a method for controlling the network device processing at least one or more applications includes the steps of transmitting a signal requesting a first list for identifying at least one or more downloadable applications or requesting a second list for identifying at least one or more downloadable contents to a server, receiving the first list or the second list from the server, displaying the received first list or second list, when a specific application is selected from the first list, or when a specific content is selected from the second list, transmitting a signal requesting the selected application or content to the server, and downloading the selected application or content from the server.

According to yet another embodiment of the present invention, a method for controlling a network device processing at least one or more applications includes the steps of receiving a key-event for creating an applications list, searching for an application that is already installed in the network device, creating a list of the searched applications, displaying the created applications list, receiving an execution request on an application selected from the at least one or more applications listed in the applications list, verifying whether or not the application requested to be executed can be executed normally by using metadata of the corresponding application, and, when it is verified that the corresponding application can be executed normally, executing the corresponding application.

### Effects of the Invention

According to an embodiment of the present invention, the network device facilitates the extension of applications and contents, and, by proposing a network device including an architecture having an independent structure for processing applications, device stability may be ensured even when performing additional extension of applications.

### Brief Description of the Drawings

Hereinafter, the characteristic features and preferred embodiments of the present invention will be described in detail with reference to the appended drawings.

Fig. 1 illustrates a block view showing a process and structure of a network device for processing a key-event, during a process of processing applications in the network device according to an embodiment of the present invention.

Fig. 2 illustrates a portion of an internal structure of the network device according to an embodiment of the present invention..

Fig. 3 illustrates a detailed view showing a structure of an open API included in an add-on application according to an embodiment of the present invention.

Fig. 4 illustrates an exemplary process of executing an add-on application according to an embodiment of the present invention.

Fig. 5 illustrates a process of delivering a key-event within the network device.

Fig. 6 illustrates an exemplary process of calling an open API of an add-on application according to an embodiment of the present invention.

Fig. 7 illustrates exemplary processes of downloading and installing an add-on application.

Fig. 8 illustrates an exemplary data structure of an application that is being downloaded according to an embodiment of the present invention.

Fig. 9 illustrates exemplary processes of downloading and installing an add-on application, in case the network device directly accesses an application distribution server, among diverse methods for downloading and installing an add-on application.

Fig. 10 illustrates a UI display screen showing an applications list (or list of applications) received from the application distribution server according to an embodiment of the present invention.

Fig. 11 illustrates a UI display screen showing an applications list (or list of applications) received from the application distribution server according to another embodiment of the present invention.

Fig. 12 illustrates a UI display screen showing a contents list (or list of contents) received from the application distribution server according to an embodiment of the present invention.

Fig. 13 illustrates a UI display screen showing an applications list (or list of applications) received from the application distribution server according to yet another embodiment of the present invention.

Fig. 14 illustrates a UI display screen showing a list of applications and contents that are already stored in the network device, when an application browser is executed, according to an embodiment of the present invention.

Fig. 15 illustrates a UI display screen managing an applications list (or list of applications) according to an embodiment of the present invention.

Fig. 16 illustrates a block view showing a structure of a digital broadcast receiver, wherein an Add-on Architecture is applied to the digital broadcast receiver according to an embodiment of the present invention.

### Best Mode for Carrying Out the Present Invention

Reference will now be made in detail to the preferred embodiments of the present invention, examples of which are illustrated in the accompanying drawings. However, the embodiment of the present invention described below may be modified to a wide range of modifications. And, therefore, it should be understood that the present invention will not be limited only to the example presented in the description of the present invention set forth herein.

Although the terms used in the present invention are selected from generally known and used terms, the terms used herein may be varied or modified in accordance with the intentions or practice of anyone skilled in the art, or along with the advent of a new technology. Alternatively, in some particular cases, some of the terms mentioned in the description of the present invention may be selected by the applicant at his or her discretion, the detailed meanings of which are described in relevant parts of the description herein. Furthermore, it is required that the present invention is understood, not simply by the actual terms used but by the meaning of each term lying within.

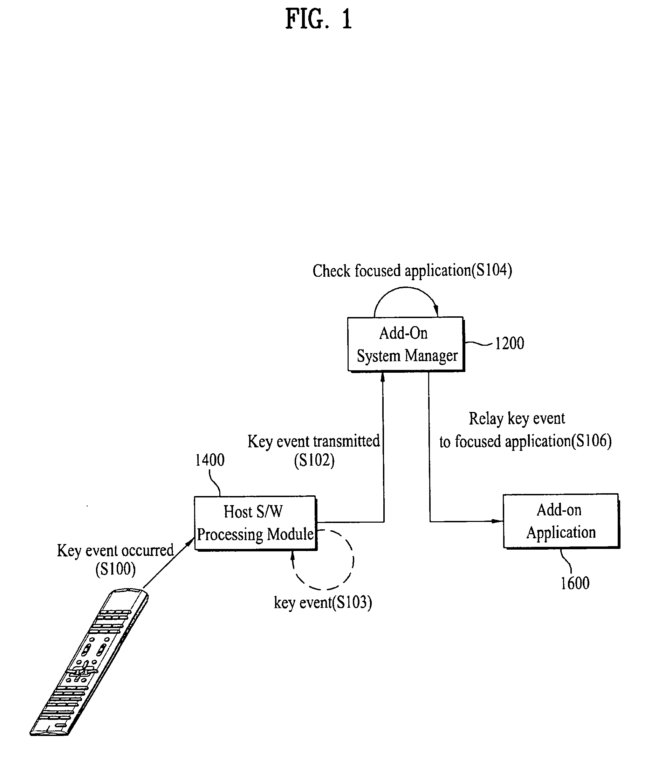

Fig. 1 illustrates a block view showing a process and structure of a network device for processing a key-event, during a process of processing applications in the network device according to an embodiment of the present invention.

A network device refers to a device being essentially capable of performing network communication and also being capable of performing calculation functions. The network device may correspond to an electrical appliance that is used in a general household, or the network device may also correspond to a mobile or portable user equipment. Herein, examples of network devices corresponding to electrical appliances may include microwave ovens, refrigerators, washing machines, TVs, and so on, with network communication functions. And, network devices corresponding to mobile or portable user equipments may include PDAs, UMPCs, laptop computers, mobile phones, and so on.

During a process of processing a key-event with respect to an application, the network device may use an Add-on Architecture. Herein, for example, an Add-on Architecture may be defined as a structure categorizing applications into main applications and add-on applications, wherein the main applications perform the basic functions of the network device, and wherein the add-on applications are added to the network device in addition to the main applications by using methods, such as networking, and executing the add-on applications through a separate process.

As shown in Fig. 1, when a consistent key-event occurs due to a user's selection (S100), a host S/W processing module (1400) receives the key-event and delivers the received key-event to an Add-on System Manager (1200), which performs an overall management of an Add-on Architecture (S102). When the Add-on System Manager (1200) receives the key-event, the Add-on System Manager (1200) verifies a focused application among the applications that are currently available for execution (S104). Then, the Add-on System Manager (1200) delivers the key-event to an Add-on Application (1600) (S106). Subsequently, after receiving the key-event, the Add-on Application (1600) processes the key-event.

Herein, for example, the focused application may be defined as a specific add-on application, which is designated by the user by using a remote controlling device of the network device or by using a control device equipped in the network device itself, among multiple applications stored in the network device, yet which is in a non-selected state.

Also, an Application may be defined as a program or software that is operated (or executed) in an operation system of a specific electronic device. Herein, examples of the Application may include video playback programs, weather forecast programs, and so on.

Furthermore, a Content may broadly refer to the product of a human intellectual activity. And, recently, the term Content has been used to refer to information that can be used in a specific device or application. For example, a video file and/or an audio file used in the video playback program, or weekly weather forecast information used in the weather forecast program may be referred to as a Content.

Instead of delivering all key-events selected by the user to the Add-on System Manager (1200), the host S/W processing module (1400) shown in Fig. 1 independently processes specific key-events that can only be processed by the host S/W processing module (1400) (S103), thereby performing functions equivalent to the specific key-events. For example, a power key may be directly processed by the host S/W processing module (1400).

By using the key-event delivery system shown in Fig. 1, an Add-on architecture may be realized while providing the user with a device manipulating environment familiar to the user by using hardware or software already existing in the corresponding network device.

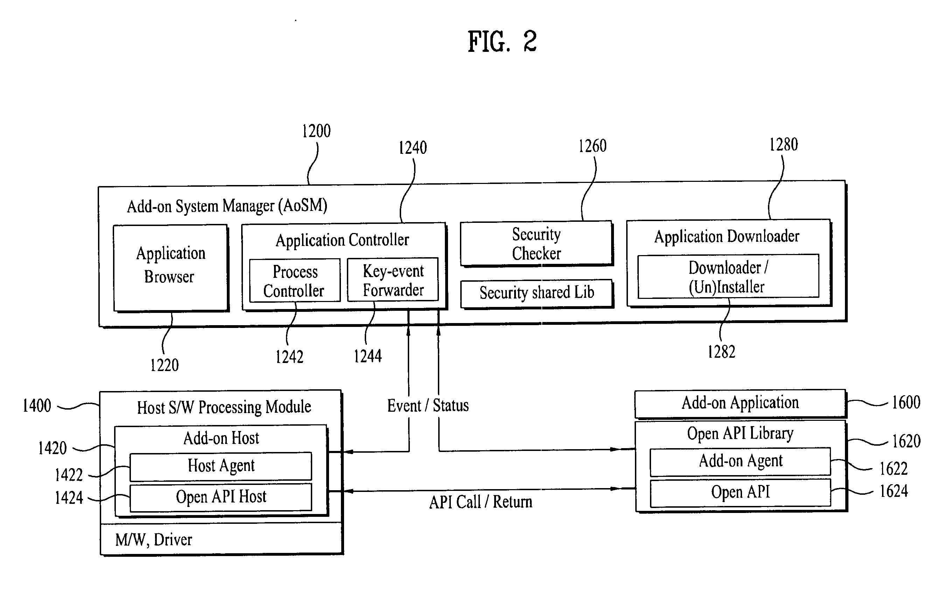

Fig. 2 illustrates a portion of an internal structure of the network device according to an embodiment of the present invention.

An Add-on Architecture according to an embodiment of the present invention for realizing the technical features of the present invention may be embodied as shown in Fig. 2. The Add-on Architecture includes an Add-on System Manager (1200) that is configured to perform an overall management of the Add-on Architecture, an Add-on Host (1420) that is configured to realize the Add-on Architecture, and Add-on Applications that are added to the network device by using diverse methods, such as networking.

The Add-on System Manager (1200) corresponds to a structure that is configured to perform an overall management of the Add-on Architecture. Herein, the Add-on System Manager (1200) includes management applications (1220, 1260, 1280) for managing the Add-on Architecture and an Application Controller (1240) for controlling the Add-on Architecture.

An Application Browser (1220) shows Add-on Applications (1600) that are currently installed in the network device to the user, the Application Browser (1220) provides an environment enabling Add-on Applications (1600), which the user wishes to execute, to be executed. Furthermore, the Application Browser (1220) may also perform a function of providing a list of contents that are stored in the network device and that can be used by the Add-on Applications (1600).

During the execution process of an Application, from the beginning to the end of the process, the Application Browser (1220) performs the main functions corresponding to the beginning of the execution process. For example, the Application Browser (1220) shows a list of applications (or Applications list) that are available for execution to the user. And, when the user personally selects a specific application from the displayed list of applications, the execution of the selected application may be initiated through the Application Browser (1220). Additionally, apart from the execution of the application personally selected by the user, when an application or content is distributed, an automatic execution of the application may be performed by using respective Metadata at the same time. And, the execution of an application may be initiated by sending a signal (or signaling) at a specific time point, during the playback of an AV content. Furthermore, an application may be executed by using a method of calling a second application, which is required by a first application, during the process of executing the first application.

Herein, the above-described methods for initiating execution of an application are merely exemplary. And, therefore, whenever required, applications may be executed by using a wider range of execution methods.

The Application Controller (1240) actually executes the application, which is requested to be executed by a direct user selection in the Application Browser (1220). Also, the Application Controller (1240) registers and manages the processes of the executed application. Also, the Application Controller (1240) performs functions such as resource usage management between each application, Focus management, user input processing, and so on. When a user input is received, the Application Controller (1240) manages the focus of each application window, and, when a registered Add-on Application (1600) is focused, the Application Controller (1240) receives an input through a remote controller and delivers the received input information to the respective application.

Additionally, the Application Controller (1240) remembers a status of the Add-on Application prior to its execution, and, when the Add-on Application (1600) is ended by an abnormal completion, the Application Controller (1240) provides a system stabilizing function that recovers the system to the state prior to the execution of the corresponding Add-on Application (1600). During the execution process of the add-on application, starting from the beginning to the end of the execution process, the Application Controller (1240) performs control and management functions after the execution of the corresponding application.

An Application Downloader (1280) performs the functions of installing and deleting the Add-on Application (1600).

The signaling and distribution of an Add-on Application may be performed by an installation process through a direct access to a distribution server of the corresponding Add-on Application. Also, installation of the application may be realized through Unicast/Multicast/Broadcast methods by using a broadcasting network or an IP (Internet Protocol) network. Also, distribution of the application may be realized by using an external storage device, such as a flash memory. Additionally, an application stored in the external storage device (or memory) may be installed by connecting the external storage device to the network device through a USB port of the network device. Herein, the above-described signaling and distribution methods of the add-on applications are merely exemplary. And, therefore, the present invention will not be limited only to the methods presented herein.

Among the above-described signaling and distribution methods of the add-on applications, when an application is received through a direct access to a distribution server of the add-on application, the Application Downloader (1280) may download a list of applications available for installation from the distribution server. Then, the Application Downloader (1280) may select a wanted application from the downloaded list of applications, so as to download the selected application. Thereafter, an Application (Un)lnstaller (1282) installs the downloaded application.

Furthermore, when the user refers to a list of add-on applications that are already installed in the network device through the Application Browser (1220), and when the user requests for an application to be deleted, the Application (Un)lnstaller (1282) provides a function for deleting a selected Add-on Application, which is installed in the network device.

During the execution process of the add-on application, starting from the beginning to the end of the execution process, the Application Downloader (1280) performs the functions of installing and deleting of the installed add-on applications.

A Security Checker (1260) performs a function of verifying whether or not damage has occurred in a downloaded or installed add-on application through meta information of the corresponding add-on application. The performance result of the Security Checker (1260) is provided to an application that manages the add-on application. The meta information of such application may be generated and provided by a download server.

Furthermore, the Security Checker (1260) monitors any abnormal operation of the add-on application, which is currently being executed. Then, whenever, an abnormal operation is detected, the Security Checker (1260) immediately initiates the appropriate measures.

With the functions of the Security Checker (1260), the integrity (or health) of the Add-on Application (1600) may be ensured. During the execution process of the add-on application, starting from the beginning to the end of the execution process, the Security Checker (1260) performs the functions of managing the add-on application.

The Add-on Host (1420) corresponds to an element that should be added to the host S/W processing module (1400), which performs the basic functions of the network device, in order to support the Add-on Architecture. The Add-on Host (1420) includes a Host Agent (1422) and an Open API Host (1424).

The Host Agent (1422) performs functions of transmitting a status of the host S/W processing module, (1400) and a key-event of the remote controller to the Add-on System Manager (1200).

The Open API Host (1424) calls on an Open API (1624) of the Add-on Application (1600) and returns the call result.

According to the present invention, the Add-on Application (1600) provides an Open API Library (1620), which includes an Add-on Agent (1622) transmitting a status of an Add-on Application to the Add-on System Manager (1200) and receiving a remote controller key-event signal, and an Open API (1624) providing API functions required for developing add-on applications. When an Add-on Application (1600) is registered to the Add-on System Manager (1200), the registered Add-on Application (1600) may use the functions provided by a host S/W through the Open API (1624). More specifically, through the Open API (1624), the Add-on Application (1600) is provided with a digital broadcast receiver hardware support provided by the host, and is also provided with API support and media playback function support provided by middleware. Thus, the Add-on Application (1600) may be efficiently executed without requiring additional support for performing the functions of executing the corresponding Add-on Application. Furthermore, the Open API (1624) provides diverse APIs for managing the Add-on Application (1600), thereby enabling **3^{rd}** parties to develop other diverse add-on applications through the provided Open API (1624), which are then supplied to network devices equipped with an Add-on Architecture. With the above-described structure, a wider range of applications may be executed by the network device, and such diversity may lead to a broader range of contents that can be consumed (or used) by the applications. Eventually, with the diversity in contents, extensive application of network devices equipped with an add-on architecture can be anticipated.

Since the network device structure shown in Fig. 2 executes and manages applications, which are independent to the basic functions of the network device, added to the network device, malfunctions or errors occurring in the additional applications do no influence the basic functions of the network device. Thus, device stability may be ensured, even when applications are additionally extended.

Furthermore, since the additionally added applications are executed by a processor other than the host S/W processing module, multiple applications may be executed simultaneously. Moreover, applications that are based upon an operating system (OS) other than the host S/W processing module may also be added to the network device.

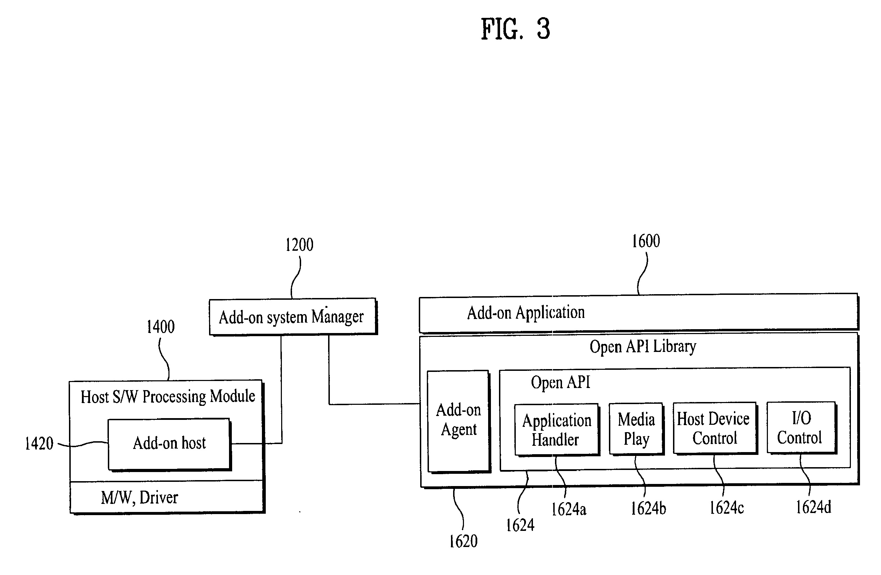

Fig. 3 illustrates a detailed structure of the open API (1624).

As shown in Fig. 3, the above-described Open API (1624) corresponds to a portion of the Add-on Architecture. When simplifying the above-described Add-on Architecture and describing the Add-on Architecture in its perspective, it may be determined that the Add-on Architecture is configured of an Add-on Host (1420), which is equipped in the Host S/W processing module (1400), which performs the basic functions of the network device, an Add-on System Manager (1200), which corresponds to a daemon processor that manages various processes, and an Open API Library (1620), which is configured to create Add-on Applications. The Open API (1624) refers to an interface included in the above-described structure, the interface being provided by the Open API Library (1620).

The structure of the Open API (1624) included in the Add-on Architecture will now be described in detail. The Add-on Application (1600) may be registered to the Add-on System Manager (1200) through the Open API (1624) and may use the basic functions of the network device that are provided from the Host S/W processing module (1400). The Open API (1624) may be provided in the form of a Shared Library, and the Add-on Application (1600) may use the Open API (1624) by using the Open API Library and its header file. However, the method of using the Shared Library is merely exemplary. And, therefore, the present invention will not be limited only to the example set forth herein.

The Open API (1624) is configured of an Application Handler (1624a), a Media Play (1624b), a Host Device Control (1624c), and an Input/Output (I/O) Control (1624d). The functions and roles of each element will now be described in detail.

The Application Handler (1624a) performs a function of notifying the beginning and the end of an Add-on application to the Add-on System Manager (1200), a registration function registering the Add-on application so that a key-event can be received, a function of requesting for diverse resources available for usage to the system and a function of being allocated with the requested resource, and so on. More specifically, the Application Handler (1624a) manages the beginning and the end of the Add-on Application, as well as all of the other events occurring during the execution of the add-on application. The add-on application may be executed by the system only when the add-on application is registered to the Add-on System Manager (1200) by using the API provided by the Application Handler (1624a).

The essential functions of the Application Handler (1624a) will now be described in detail.

The Application Handler (1624a) may set up a communication channel between an add-on application and an application managing the application. This is for the purpose of event delivery and may also be realized through a Callback function registration. However, the Callback function registration is merely exemplary. And, therefore, the present invention will not be limited only to the method of setting up a communication channel. Furthermore, the Application Handler (1624a) also performs a function of registering the Add-on Application (1600) to the Add-on System Manager (1200), a function of cancelling registration of the Add-on Application (1600) from the Add-on System Manager (1200), a function of performing a Health check of the Add-on Application (1600), a function of delivering a user input, such as an input of a key through the remote controller, to the Add-on Application, a function of requesting for a focus on a specific Add-on Application, a function of requesting for resource allocation that is to be used by the Add-on Application, a function of returning the allocated resource, a function of calculating a number of add-on applications that are currently being executed, and so on.

The Media Play (1624b) provides an API for playing-back audio/video, and so on. The Media Play (1624b) supports both Streaming Media and Downloaded Media and also provides the functions of playback, pause, restart, and stop.

The Host Device Control (1624c) corresponds to an API that is configured to enable the Add-on Application (1600) to use the functions corresponding to the basic applications of the network device. When a TV is given as an example of the network device, the Add-on Application (1600) may be provided with APIs for controlling the general functions of a TV, such as changing the channel or volume of the TV, receiving program information, and so on, by using the Host Device Control (1624c).

The I/O Control (1624d) provides functions required for inputting and outputting files or for using a network, with the exception for functions provided from a Lenux system or a standard C Library. The I/O Control (1624d) may also perform the roles of receiving information on a status of an internal/external storage device, a mount path in Lenux, a connection status of the network device, and so on.

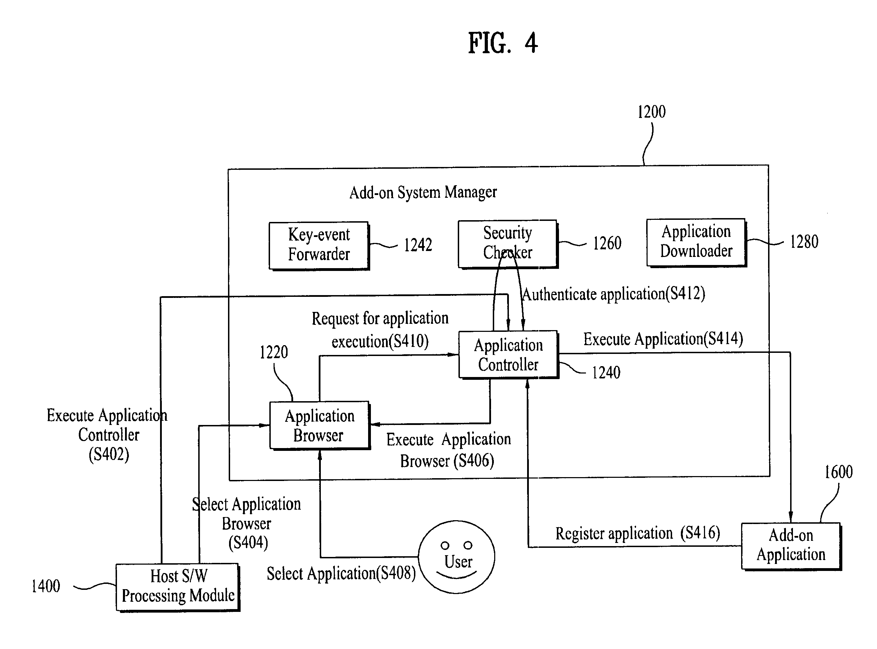

Fig. 4 illustrates an exemplary process of executing an add-on application according to an embodiment of the present invention.

Referring to Fig. 4, the Host S/W processing module (1400) executes the Application Controller (1240) (S402). At this point, when an Add-on Architecture is used, the Application Controller (1240), which performs an overall control of the Add-on System Manager (1200), and when the network device always uses an Add-on function as the function that is to be executed, the add-on function may be initiated when the network device is being booted. And, if this function is used only when required, this function may be dynamically executed, and, in this case, when the Host S/W processing module (1400) chooses (or selects) the use of the Add-on function, the Application Controller (1240) may be executed.

Then , the user selects the execution of the Application Browser (1220) through a UI (User Interface) menu of the Host S/W processing module (1200) (S404).

With the selection made in the previous process step (S404), the Application Controller (1240) executes the Application Browser (1220) (S406). When the Application Browser (1220) is executed, a specific application may be selected and executed from a list of Applications through the Application Browser (1220). The Application Browser (1220) may also be realized as an add-on application.

A list of Applications that are already installed in an internal storage device of the network device or applications that exist in an external storage device, such as an external memory, of the network device may be searched, so that an application that is to be executed can be selected (S408). At this point, the object available for selection and execution will not be limited only to applications. And, therefore, by simply selecting a content, a respective application that can use the selected content may be immediately executed. Thus, the corresponding content may be consumed. For example, a directly executable execution file may be selected and executed. Or, a content of a flash application, such as a flash swf (Shockwave Flash Object) file, may be selected so as to operate a flash application, thereby calling and using the corresponding content.

In the previous process step (S408), the execution of the selected application is requested to the Application Controller (1240) (S410).

When a request for executing an application is received, the Application Controller (1240) first verifies whether or not the application can be executed normally through the Security checker (1260) (S412). Metadata that are included in the application at the point when the application is distributed may be used for such verification process, and the verification process may use a method such as SHA-1 (Secure Hash Algorithm-1).

When the verification process is successful in verifying the corresponding application as a normal and safe application, the corresponding application is executed (S414).

At the beginning of its execution, the application registers itself to the Application Controller (1240) (S416).

The execution of the Add-on Application (1600) starts with the registration of the Add-on Application (1600) to the Add-on System Manager (1200). After the registration process, the application performs its targeted function or role. Then, when the application is to be ended, the ending of the application is notified to the Add-on System Manager (1200) so that the application can cancel its registration to the Add-on System Manager (1200).

When the Add-on Application (1600) requests for its registration to the Add-on System Manager (1200) at the point of its initiation, a required initialization process is performed within an Open API (not shown), and the Add-on System Manager (1200) is accessed, so that the application can be registered. The initialization performed within an open API Library (not shown) may include a variable initialization and a task (thread) initialization, which are internally used.

After completing the request for its registration, the Add-on Application (1600) performs the initialization that the application itself requires and then performs the main functions.

When the execution of the Add-on Application (1600) is ended, the Add-on Application (1600) first performs composes a report on its data or tasks, then uses an Open API Library function to notify the Add-on System Manager (1200) that the corresponding application is to be ended. In this case, the library requests for the registration of the Add-on Application to be cancelled from the Add-on System Manager (1200). Then, the Library ends the access and composes the report on the use of variables or tasks completed within the system. The main operations performed by the Library may include returning the resources that have not been correctly returned by the application, arranging the memory and task (thread), and so on.

A callback function may be used for the method of receiving a key-event. And, in order to do so, when registering the application at the beginning of its execution, a call process may be made by using a callback function on a key-event, so that the registration process can be performed. However, this is merely exemplary, and other methods may be used herein. If the key-event is not required to be received, the registration process is not required to be performed. When a key-event callback is registered, all remote controller key events are delivered via callback if the add-on application is in a focused status. Information on whether or not the application has used the delivered key event is indicated by a callback return. And, the key-events that are not used may be processed by the host S/W processing module (1400). And, since the Host S/W processing module (1400) is waiting the key-event to be processed, the key-event callback should be returned as soon as possible.

The method used herein corresponds to a method of executing the application by a direct selection made by the user. And, when the application is executed by using other methods including the above-described method according to the present invention, the process steps after step (S410) may be identically used.

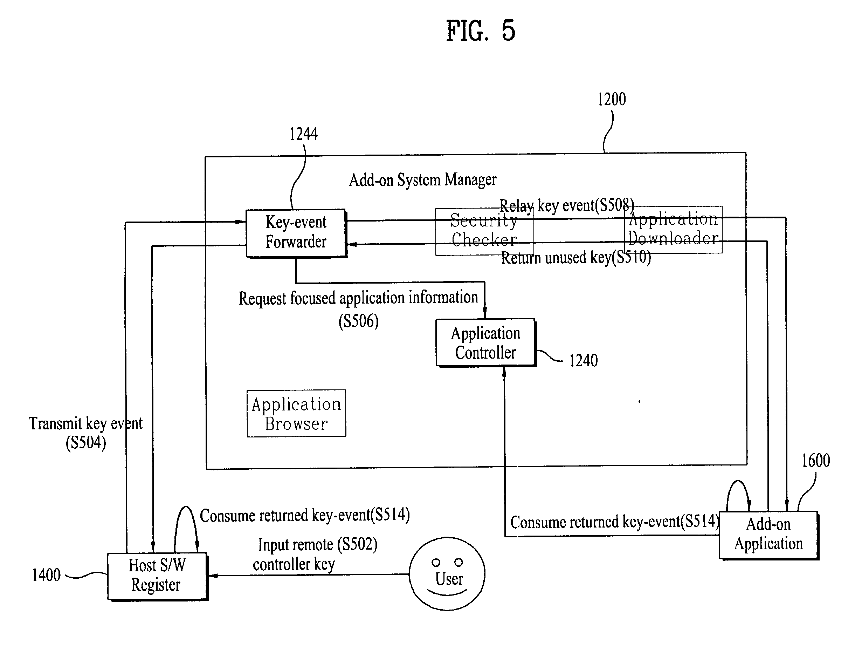

Fig. 5 illustrates a process of delivering a key-event within the network device. Although it is described in Fig. 5 that the key input is performed by using a remote controller or a keyboard, the present invention will not be limited only to the example set forth herein, and, therefore, the key input may also be applied to cursor-based events, such as movements of a mouse or clicking of mouse buttons. Furthermore, the key input may also be applied to other types of user input methods.

As shown in Fig. 5, when the user has inputted a key input by using an input device, such as a remote controller or a keyboard, the Host S/W processing module (1400) receives the inputted key and initiates processing of the received key input (S502). Specific keys that can only use the Host S/W processing module (1400) are directly processed by the Host S/W processing module (1400) instead of being transmitted. Herein, for example, a power key corresponds to a key event that can be directly processed by the Host S/W processing module (1400).

The Host S/W processing module (1400) transmits an event on the received user input key to the Add-on System Manager (1200) (S504). Then, a key-event forwarder (1244) included in the Add-on System Manager (1200) receives the transmitted event and processes the received event. The key-event forwarder (1244) may be included in the Application Controller (1240) or may correspond to an independent module.

The key-event forwarder (1244) requests for information on a currently focused application to the Application Controller (1240) (S506). The Application Controller (1240) maintains the information on the currently focused application and returns the information on the currently focused application based upon the request made by the key-event forwarder (1244).

The key-event forwarder (1244) relays a key-event inputted to the currently focused application (S508).

Then, a key that is not used by the application is returned to the key-event forwarder (1244) (S510).

Thereafter, the key-event forwarder (1244) delivers the returned key to the Host S/W processing module (S512),

As a process step for processing the inputted key, the inputted key is either processed or returned by the currently focused application, or returned by the currently focused application so as to be processed by the Host S/W processing module (S514).

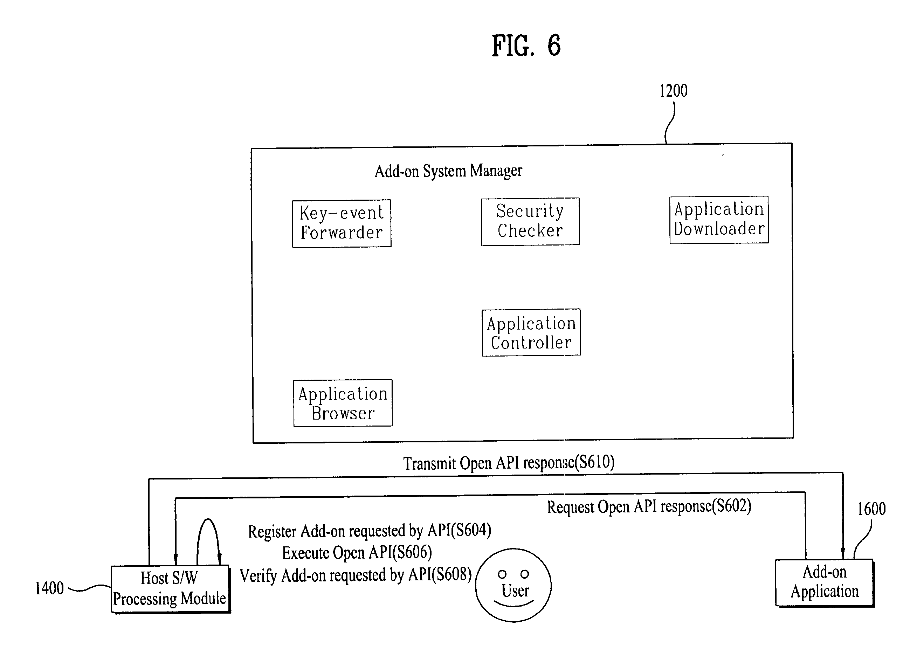

Fig. 6 illustrates an exemplary process of calling an open API of an add-on application according to an embodiment of the present invention.

As shown in Fig. 6, the Add-on Application (1600) requests the Host S/W processing module (1400) for the execution on an Open API (not shown) (S602).

The Host S/W processing module (1400) registers and manages information on the Add-on Application (1600) that has requested for the execution of the API (S604). Depending upon the Open API, since the registration may be maintained from the point when the resource is allocated to the point when the allocated resource is returned, information on an application related to when calling on an API is required to be maintained.

The requested Open API is then executed (S606). Before executing the requested Open API, the corresponding application may verify whether or not the application has the authority to request the execution of the Open API. Such information on the execution authority of an application may be included in certification (or verification) information of the application. And, based upon the authority information, the authority to execute the API is checked so that inappropriate requests to execute API can be blocked.

Thereafter, the application that has requested the API execution is verified, and the execution result is recorded in an API call history (S608).

Finally, the execution result is transmitted to the application that has requested the API execution (S610).

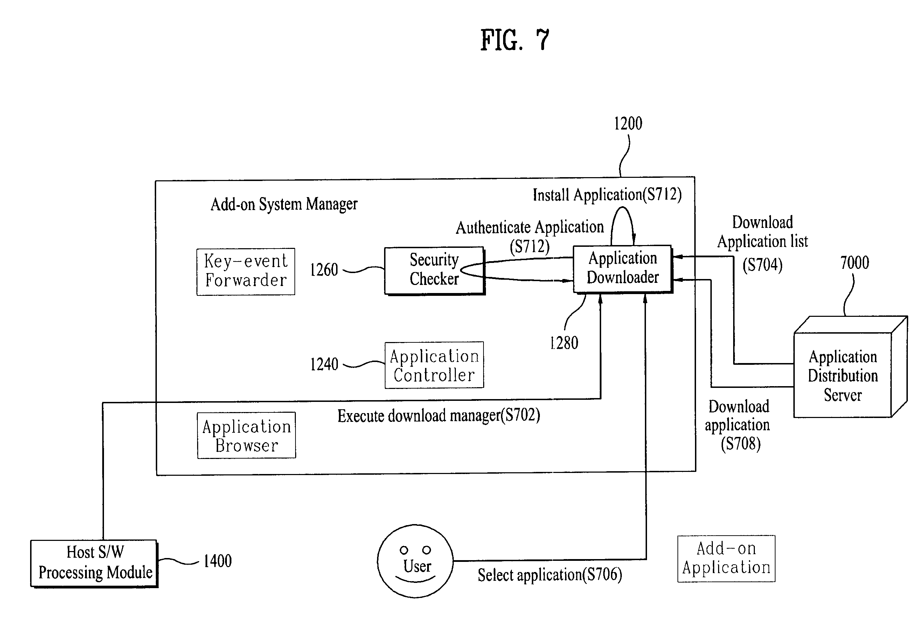

Fig. 7 illustrates exemplary processes of downloading and installing an add-on application. The signaling and distribution of an add-on application may be performed by using diverse methods. However, Fig. 7 shows an example of having the user directly access an application download server so as to select and install an add-on application according to an embodiment of the present invention.

As shown in Fig. 7, the user executes the Application Downloader. (1280) (S702). The Application Downloader (1280) may be realized as an Add-on Application. And, in this case, the Application Downloader (1280) may be executed through the Application Controller (1240).

Thereafter, the user accesses an Application Distribution Server (7000) so as to download an Applications list (S704). An access address of the application distribution server may correspond to an addressed that is predetermined in the network device or may be obtained by a direct input of the user. Furthermore, the access address of the application distribution server may also be obtained by using methods, such as acquiring the address of the application distribution server via signaling or through a broadcast channel.

Also, during this process, an authentication procedure for verifying whether or not the network device is assigned with a legitimate authority may be performed when accessing the distribution server. Herein, in order to perform the authentication procedure, information on the network device, such as the manufacturer, product number, serial number, device ID, and so on, of the network device is transmitted so that the authentication procedure can be performed.

Then, a list of downloaded applications or contents is displayed to the user, so that the user can select an application or content which the user wishes to download (S706).

Thereafter, the selected application or content is downloaded (S708).

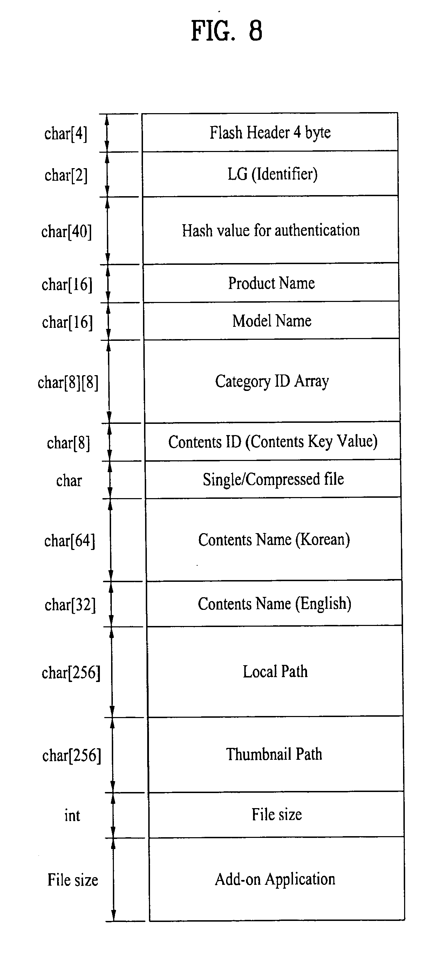

Subsequently, data for authentication, which are transmitted through a header of the downloaded application or through a separate set of metadata, are used to check the compatibility of the application through the Security Checker (1260) (S710). A method such as SHA-1 may be used for the authentication. An example of adding a header to the application and transmitting the added header along with the metadata is described in Fig. 8. This is merely another exemplary embodiment of the present invention, and such metadata may be transmitted through a separate path or may have a different form of packaging structure.

Then, the downloaded application is installed by using the metadata information transmitted through the separate set of metadata or through the header of the downloaded application (S712). When the information on the installation path is signaled through the metadata, the installation is performed in accordance with the signaled installation path.

Fig. 8 illustrates an exemplary data structure of an application that is being downloaded according to an embodiment of the present invention.

As shown in Fig. 8, the data structure of the downloaded application is configured of a header, an Add-on identifier, a hash value of an authentication message of an encrypted server, a product name, a model name, a category ID array, a content ID, a file type, content name in Korean/English, a local path, a Thumbnail Path, a file size, and Add-on Application data.

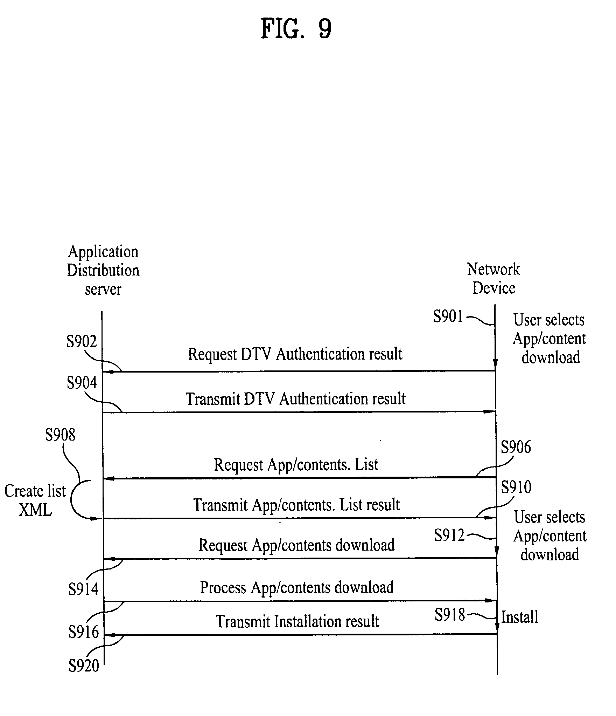

Fig. 9 illustrates exemplary processes of downloading and installing an add-on application, in case the network device directly accesses an application distribution server, among diverse methods for downloading and installing an add-on application. Fig. 9 shows an example of an authentication procedure, a process of downloading an applications list, and a process of downloading an application are all performed in relation with a single server. However, this is merely exemplary, and, therefore, a service may be provided through a separate server for each function.

As shown in Fig. 9, the user executes the Application Downloader (not shown) (S901). Herein, the Application Downloader may also correspond to an Add-on application, and, in this case, the Application Downloader (not shown) may be executed by the Application Controller (not shown).

An authentication procedure for verifying whether or not the network device is assigned with a legitimate authority may be performed when accessing the distribution server. When an authentication procedure for the network device is requested from the network device to the accessed server (S902), the server verifies the authority of the corresponding network device and transmits the authentication result to the network device (S904). Herein, in order to perform the authentication procedure, information on the network device, such as the manufacturer, product number, serial number, device ID, and so on, of the network device is transmitted so that the authentication procedure can be performed. The above-described authentication procedure may be required, or may not be required. For example, in case of advertisement contents or free applications, the authentication procedure may not be required.

The network device sends a request to the application distribution server for a list of applications or contents (S906). The application distribution server then creates the list of applications or contents (S908). Then, the network device downloads the list of applications by accessing the application distribution server (S910).

The access address of the application distribution server may correspond to an address that is predetermined in the network device, an address directly inputted by the user, an address of the application distribution server acquired by signaling or through a broadcast channel, or an address of the application distribution server acquired from an authentication result after performing an authentication procedure of the network device.

The list of downloadable applications may correspond to a list of applications that can only be operated in accordance with the system requirements of the network device, or the list of downloadable applications may correspond to a list indicating only the applications that can be operated among the list of downloadable applications.

When a specific application or content is selected by the user (S912), the user transmits a download request signal respective to the selected application or content to the application distribution server (7000) (S914). Then, the user downloads the selected application (S916). The downloaded application may be automatically installed, or the downloaded application may be installed based upon installation options selected by the user (S918). A download location of the selected application may be acquired from metadata of the information on the received applications list.

After installing the downloaded application, the network device may report the installation result to the server (S920). At this point, the network device may transmit a report on the information on the installed application and the information on the installation result to the server along with information for identifying the network device, such as the device ID of the network device.

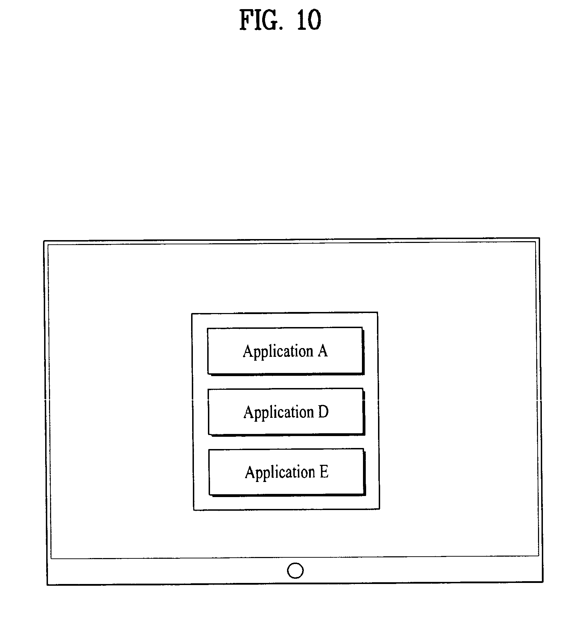

Fig. 10 illustrates a UI display screen showing an applications list (or list of applications) received from the application distribution server according to an embodiment of the present invention. Herein, the list of applications may only include applications that can be operated in accordance with the system requirements of the network device.

In Fig. 10, since only applications A, D, and E can be operated in accordance with the system requirement of the network device, Fig. 10 shows an exemplary result of a list of applications excluding applications B and C being transmitted to the network device.

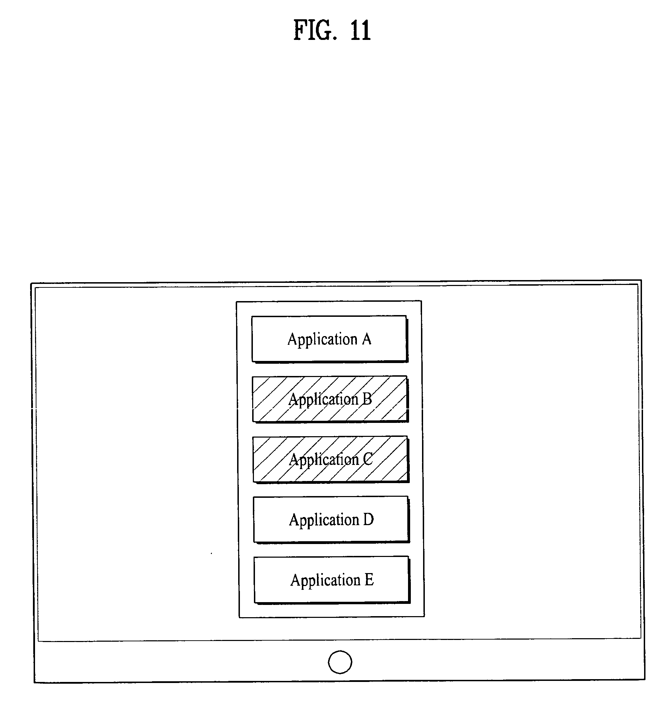

Fig. 11 illustrates a UI display screen showing an applications list (or list of applications) received from the application distribution server according to another embodiment of the present invention. Herein, the list of applications may emphasize only the applications that can be operated in accordance with the system requirements of the network device, or the list of applications may be displayed while excluding the applications that cannot be operated in accordance with the system requirements of the network device.

Referring to Fig. 11, since applications B and C cannot be operated in the network device that has requested the list of applications, Fig. 11 shows a result of transmitting a list of applications while marking applications B and C as applications that cannot be downloaded within the downloaded list of applications. When the list of application is created by marking the applications that cannot be operated by the network device, the user may easily acknowledge the need to upgrade firmwares installed in the network device, the user may easily acknowledge the need to upgrade the performance of the network device itself.

Herein, Fig. 11 shows an example of indicating only the applications that can be operated in accordance with the system requirements of the network device. The display method of the list of applications may use diverse methods for differentiating the applications that can be operated from the applications that cannot be operated.

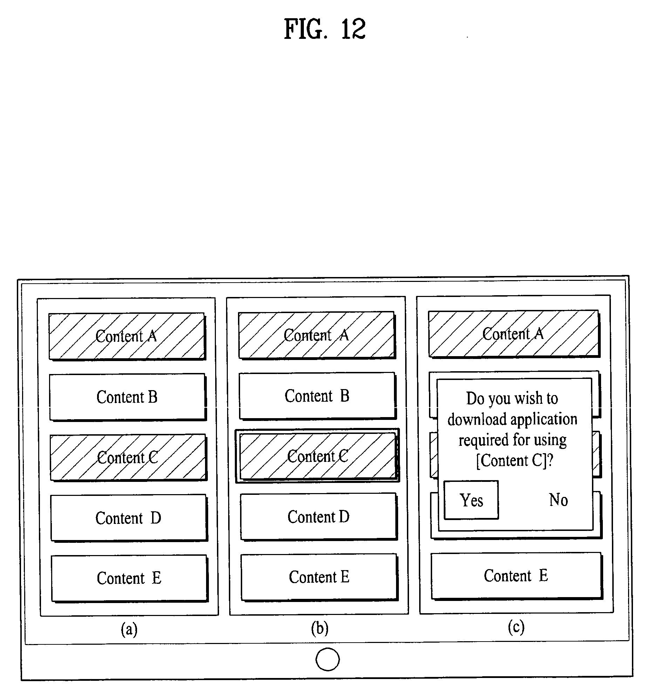

Fig. 12 illustrates a UI display screen showing a contents list (or list of contents) received from the application distribution server according to an embodiment of the present invention. Herein, the list of downloadable contents may be received from the server. In this case, information on the applications that are already installed in the network device may be transmitted to the network device, and the server may only send out contents that can be applied by the applications that are already installed in the network device.

Referring to (a) of Fig. 12, contents A and C are marked as contents that cannot be applied to the application installed in the network device. Therefore, (a) of Fig. 12 shows the result marking the non-applicable in the list of contents. Herein, contents B, D, and E correspond to contents that can be applied to the application, which is already installed in the network device.

Referring to (b) of Fig. 12, the user has selected content C, which cannot be applied to the application, which is already installed in the network device. In this case, since the network device is not equipped with an application that can consume (or use) content C, the respective application cannot be executed.

Referring to (c) of Fig. 12, among the list of downloadable contents, when an application that can apply the respective content is not installed in the network device, and when the user selects the corresponding content C, which cannot be executed, the user may newly download the application that can apply content C. At this point, a separate dialog box is displayed on the display screen, wherein the dialog box asks the user whether or not the user wishes to download the corresponding application. And, the downloading of the application may be decided in accordance with the user's selection.

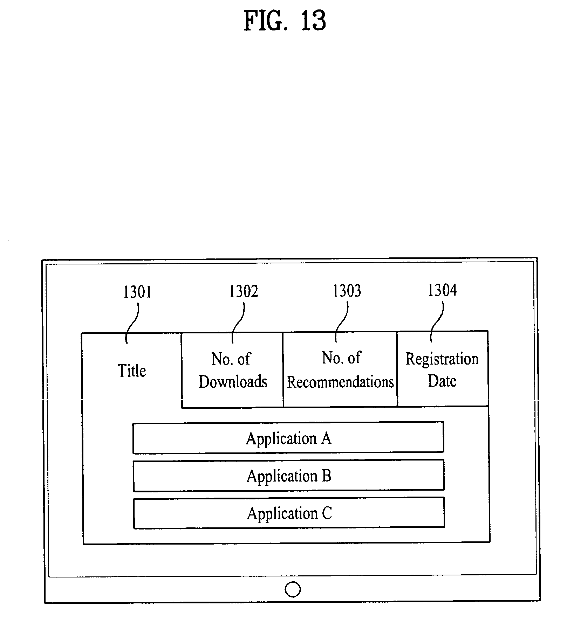

Fig. 13 illustrates a UI display screen showing an applications list (or list of applications) received from the application distribution server according to yet another embodiment of the present invention. The user may select a specific filtering option so as to receive only a list of applications or contents corresponding to the selected filtering option. Herein, the filtering option may refer to the title of an application, a number of downloads, a number of recommendations, date of registration, and so on. At this point, the filtering option is set up as an information field, so that a list of applications or contents including a sub list, which is aligned based upon the information field, can be received.

Fig. 13 shows an example wherein a list of applications is requested, and wherein the filtering option is set up as the title, number of downloads, number of recommendations, and date of registration of each application. The application distribution server creates an applications list by aligning applications by each filtering option designated as the filtering option from the network device. For example, in Fig. 13, a Title filtering option tab (1301) arranges the searched applications by an alphabetical order, and a Number of Downloads tab (1302) arranges the applications by a ranking order of downloads, a Number of Recommendations tab (1303) arranges the applications by a ranking order of recommendations, and an order of Registration Date (1304) arranges the applications by an order of the most recently downloaded applications.

As described above, by aligning (or arranging) applications by a filtering option designated by the user, the user may be capable of conveniently selecting a desired application without having to separately edit the received applications list or to search for additional information.

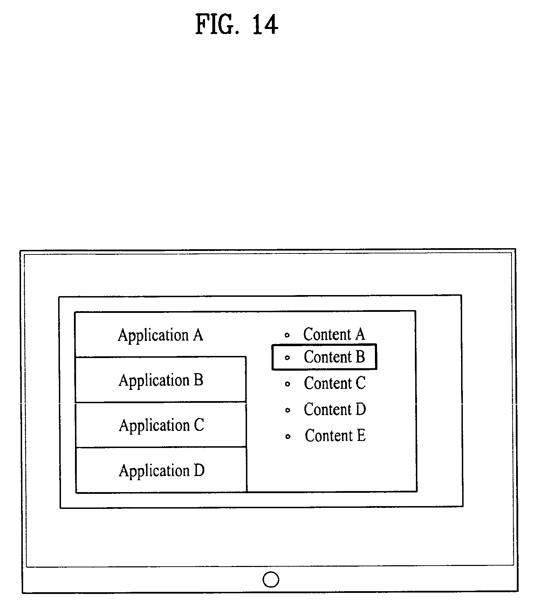

Fig. 14 illustrates a UI display screen showing a list of applications and contents that are already stored in the network device, when an application browser is executed, according to an embodiment of the present invention. Herein, a list respective only to the applications may be created, and a list respective only to the contents may be created. Furthermore, in Fig. 14, when application A is focused, contents A to E, which can be applied by application A, are marked in a sub list. Herein, when the user inputs a key-event for selecting content B, the selected content B may be provided to the user while application A is being executed.

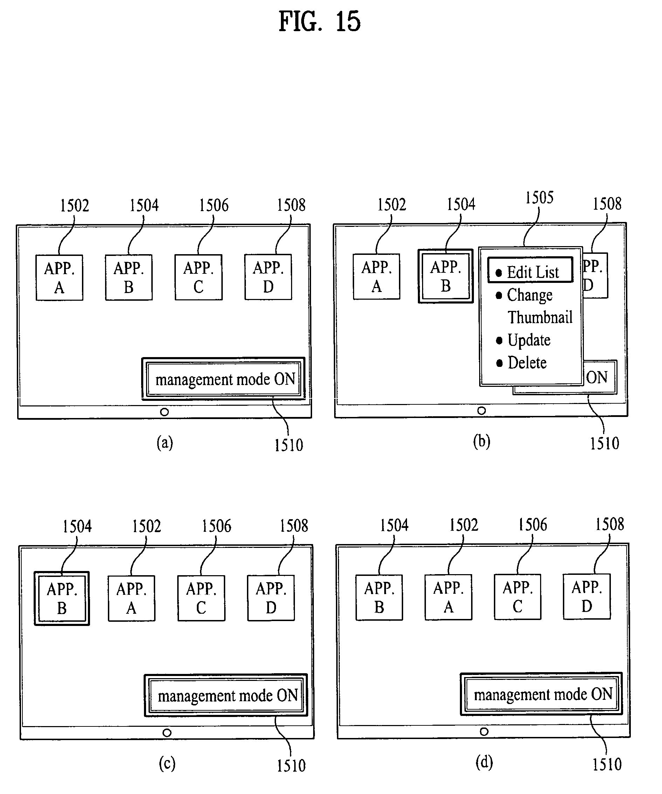

Fig. 15 illustrates an example of managing an applications list according to an embodiment of the present invention.

As shown in (a) of Fig. 15, when an applications list is displayed by the application browser, a management mode of the applications list may be executed. Herein, the management mode is initiated by a Management Mode Execution tab (1510).

As shown in (b) of Fig. 15, when the user wishes to change the alignment order of application B, the user selects a tab (1504) corresponding to application B while the management mode is turned on. When the tab (1504) corresponding to application B is selected, a separate Management Menu (1505) is displayed. Herein, the Management Menu (1505) may include menu items for editing the list, changing application Thumbnail, performing application update, deleting an application, and so on.

As shown in (c) of Fig. 15, when the user selects a menu item for editing the list, the tab (1504) corresponding to application B may be horizontally relocated from left to right (or from right to left).

As shown in (d) of Fig. 15, when the editing of the list is completed, the Management mode is turned off, and a newly updated (or edited) applications list may be acquired.

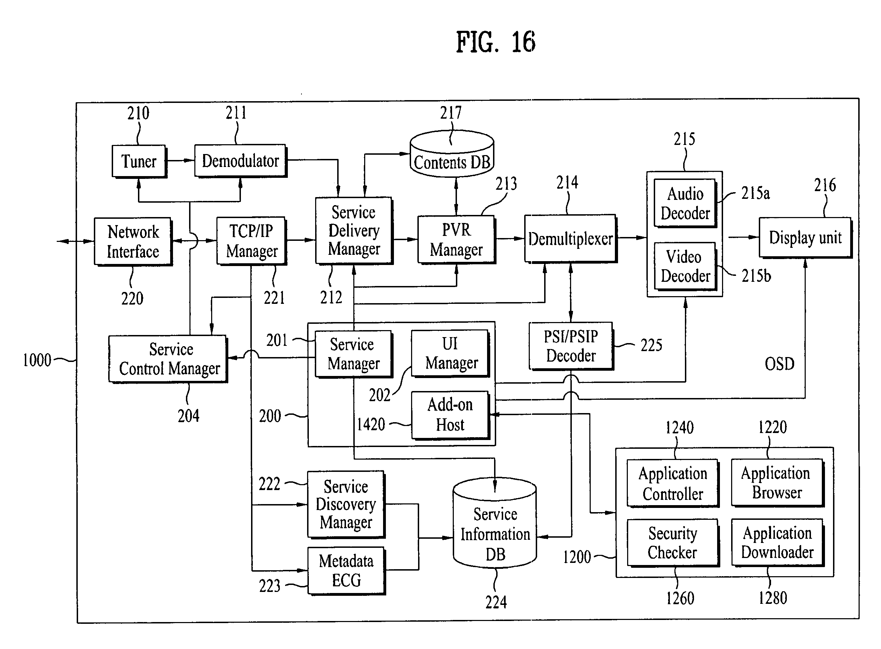

Fig. 16 illustrates a block view showing a structure of a digital broadcast receiver, wherein an Add-on Architecture is applied to the digital broadcast receiver according to an embodiment of the present invention.

The digital broadcast receiver (1000), which corresponds to a network device, includes a tuner (210) configured to receive terrestrial (or groundwave) broadcasting, cable broadcasting, satellite broadcasting, and so on, and a demodulator (211) configured to demodulate the received broadcast signals. Additionally, the digital broadcast receiver (1000) may also include a network interface (220) configured to receive packets being received through a network and to transmit the received packets to the network, i.e., a network interface (220) configured to receive contents and update messages from a service provider through a network, and a TCP/IP manager (221) configured to manage packet delivery of packets, which are received and to be transmitted through the network interface (220), from sources to targeted destinations of the packets.

A service delivery manager (212) controls service data that are received through the tuner (210) and the network interface (220). For example, when controlling real-timing streaming data, an RTP/RTCP (Real-Time Transport Protocol/RTP Control Protocol) may be used. In case of transmitting real-time streaming data by using the RTP, the service delivery manager (212) parses the received service data packet based upon the RTP and transmits the parsed data packet to the demultiplexer (214). Alternatively, the service delivery manager (212) may have a PVR manager (213) record (or film) the received service data packet based upon the control of a service manager (201), thereby storing the recorded packet in a contents database (217). Thereafter, the service delivery manager (212) uses the RTCP to perform feedback to a server providing the network received information.

The demultiplexer (214) demultiplexes the received data packet to audio, video, PSI (Program Specific Information) data, and so on, thereby transmitting the demultiplexed data to each of an audio/video decoder (215) and a PSI/PSIP decoder (225).

The PSI/PSIP decoder (225) decodes service information, such as the PSI (Program Specific Information). More specifically, the PSI/PSIP decoder (225) receives and decodes a PSI section, a PSIP (Program Specific Information Protocol) section, or a DVB-SI (Service Information) section, and so on, which are demultiplexed by the demultiplexer (214).

The audio/video decoder (215) decodes each of the audio data and the video data, which are demultiplexed by the demultiuplexer (214). The audio decoder (215a) outputs the decoded audio data to the outside through a speaker (not shown), and the video decoder (215b) provides the decoded video data through a display unit (216).

As an exemplary embodiment of a network device applying the add-on architecture according to the present invention, the digital broadcast receiver (1000) includes a Host Application Manager (200) configured to operate software that is generally executed by a DTV, and an Add-on System Manager (1200) configured to execute a host software and to download contents by using a separate process, so as to execute and extend the downloaded contents.

The Host Application Manager (200) manages the overall status of the digital broadcast receiver (1000) and provides a user interface, and the Host Application Manager (200) operates in connection with the Add-on System Manager (1200). In order to do so, the Host Application Manager (200) includes a Service Manager (201), a User Interface Manager (202), and an Add-on Host (1420).

In order to provide a service, which is received upon request made by the user, the Service Manager (201) controls a Service Control Manager (204), a Service Delivery Manager (212), and a PVR Manager (213).

The Service Control Manager (204) selects and controls services. For example, when the user selects a Live broadcasting service, which consists of a broadcasting method identical to that of the conventional broadcasting method, the Service Control Manager (204) uses an IGMP or RTSP so as to select and control the corresponding service. And, when the user selects a service, such as a VOD (Video On Demand) service, the Service Control Manager (204) uses the RTSP so as to select and control the corresponding service. The RTSP protocol may provide a trick mode with respect to the

real-time streaming. Also, the Service Control Manager (204) uses an IMP (IP Multimedia subsystem) and an SIP (Session Initiation Protocol) so as to initialize and manage a session passing through an IMC gateway. Herein, the protocol is merely exemplary, and, therefore, other protocols may also be used in the present invention.

Moreover, the Service Manager (201) generates a Channel Map and, then, uses the generated Channel Map based upon a key input received from the User Interface Manager (202), so as to output a channel select signal to the Service Control Manager (204). At this point, the Service Control Manager (204) controls the tuner (210) and the demodulator (211) based upon the channel select signal.

Also, the Service Manager (201) detects service information of a stored channel from a Service Information Database (224), so as to set up an audio/video PID (Packet Identifier) of the selected channel in the demultiplexer (214).

The User Interface (UI) Manager (202) provides a GUI (Graphic User Interface) for the user by using an OSD (On Screen Display), and also receives a key input of the user from a remote controller or a touch panel, so as to operate the application based upon the received input. For example, when a key input related to channel selection is received from the user, the User Interface (UI) Manager (202) transmits the key input signal to the Service Manager (201).

The Add-on Host (1420) corresponds to a structure that is added to the Host Application Manager (200) in order to support the operation of the Add-On System Manager (1200). Herein, the Add-on Host (1420) controls the reception and execution of the contents in the Add-On System Manager (1200). The Add-on Host (1420) corresponds to an operating system that controls other functions of the digital broadcast receiver, e.g., apart from outputting broadcast signals, the Add-on Host (1420) controls the execution and download of contents within the Add-on System Manager (1200).

As shown in Fig. 2, the Add-on Host (1420) includes a Host Agent (1422) and an Open API Host (1424). Herein, the Host Agent (1422) receives status information of a host software within the DTV and also receives a key input, which is received from the UI manager (202). Also, the Open API Host (1424) calls on an Open API (Application Programming Interface) of an Add-on Applications, so as to execute the called Open API and to receive the execution result.

Also, the Add-on Host (1420) transmits a download control command to the Application Downloader (1280) based upon the key input received from the UI Manager (202).

The Add-on System Manager (1200) corresponds to a system that performs an overall management of the add-on application, such as installing, executing, managing, deleting, and so on the add-on application. Herein, the Add-on System Manager (1200) includes an Application Controller (1240) configured to perform an overall control of the Add-on Application, such as managing the execution/ending and an execution table of the Add-on application, an Application Browser (1220) configured to have functions for browsing and selecting the add-on application, a Security Checker (1260) configured to ensure security when installing executing, managing, and deleting the add-on application, and an Application Downloader (1280) configured to install the add-on application.

According to the present invention, the Add-on Host (1420) is connected to an internet network through the network interface (220) so as to perform an authentication procedure with a server that provides the add-on application.

After performing the authentication procedure between the Add-on Host (1420) and the server, the Application Downloader (1280) is operated in accordance with the command of the Add-on Host (1420), and an applications or contents list request signal is transmitted to the server, so that the desired applications or contents can be downloaded from the server. At this point, the contents list may be compressed and received, and the Applications Downloaded (1280) may decompress the received contents list and store the decompressed list in a Service Information Database (224). Herein, the contents list may be stored in an XML format.

Furthermore, when the process of downloading the applications or contents list is completed, the Application Downloader (1280) transmits device ID information of the digital broadcast receiver to the server and also transmits version information of the received applications or contents list to the server.

The Application Browser (1220) outputs the stored applications or contents list to a display unit (216). Then, the Application Browser (1220) receives a selected execution command for one or more of the downloaded applications or contents from the UI Manager (202), thereby executing the selected application or content.

A Service Discovery Manager (222) searches for a selected service from packets that are provided by the TCP/IP Manager (221) with respect to a service that is provided over a two-way (or bi-directional) IP network. A Metadata Manager (223) detects metadata associated to the service from packets, which are provided by the TCP/IP Manager (221).

The Service Information Database (224) stores Service Information (SI) of decoded sections from a PSI/PSIP decoder (225), information associated with services searched from the Service Discovery Manager (222), and metadata searched from the Metadata Manager (223). Additionally, the Service Information Database (224) also stores set-up data respective to the system. The Service Information Database (224) may be realized by using a non volatile memory (or Non Volatile RAM) or a flash memory and may also be realized in the form of at least one or more areas logically divided within the same storage area.

As described above, the present invention has been described in accordance with a limited range of embodiments and drawings. However, the present invention will not be limited only to the examples given the description of the present invention. And, therefore, it will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents. It is also apparent that such variations of the present invention are not to be understood individually or separately from the technical scope or spirit of the present invention.

### Best Mode for Carrying Out the Present Invention

As described above, details related to the present invention have been described in accordance with the best mode for carrying out the present invention.

### Industrial Applicability

As described above, the present invention may be applied to a device that is capable of performing networking operations.

## Claims

1. In a network device processing at least one or more applications, the network device processing at least one or more applications comprising:
a host S/W processing module configured to receive a key-event for executing a specific command and to optionally transmit the received key-event to an add-on system manager;
an add-on system manager configured to verify a specific application that is focused among at least one or more currently executable applications, and to transmit the received key-event to the focused specific application; and
an add-on application configured to process the received key-event.

2. The network device of claim 1, wherein, when the host S/W processing module receives the key-event, the host S/W processing module determines whether or not the received key-event is to be processed only by the host S/W processing module, and wherein, based upon the determined result, if the received key-event is determined to be processed only by the host S/W processing module, the host S/W processing module processes the key-event by itself.

3. The method of claim 1, wherein the add-on system manager comprises:
an application browser configured to show a list of add-on applications installed in the network device;
an application controller configured to execute applications that are requested to be executed, and to register and manage a process of the executed application;
an application downloader configured to download, install, and delete an add-on application; and
a security checker checking for any damage occurring in the downloaded or installed add-on application.

4. The network device of claim 1, wherein the host S/W module
comprises:
a host agent configured to transmit a status of the host S/W module and a key-event to an add-on manager; and
an open API host configured to execute an open API call on an add-on application and to return the respective result.

5. The network device of claim 1, wherein the add-on application comprises:
an add-on agent configured to transmit a status of the add-on application to add-on manager and to receive a key-event; and
an open API configured to provide an API required for designing the add-on application.

6. The network device of claim 3, wherein the application controller executes an application by using a method of performing at least one or more of an automatic execution by using metadata, when an application or content is distributed, an execution of an application that is signaled at a specific point of a content, an execution initiated by triggering, an execution initiated by calling another application within an application, and an execution initiated by a user's application execution selection.

7. The network device of claim 3, wherein the application controller remembers a status prior to the execution of the add-on application, and, wherein, when the add-on application is ended by an abnormal termination, the application controller recovers the system to the remembered status.

8. The network device of claim 3, wherein the application controller is activated only when an add-on architecture is used.

9. The network device of claim 3, wherein the application downloader installs an application by using at least one of the following installation methods including an application installation performed by a direct access to an add-on application distribution server, an application installation through Unicast/Multicast/Broadcast methods by using a broadcasting network or an IP network, and an application installation performed by connecting the network device to an external storage device and by installing an application stored in the external storage device.

10. In a method for controlling a network device processing at least one or more applications, the method for controlling the network device processing at least one or more applications comprising:
transmitting a signal requesting for an authentication of the network device to a server;
receiving an identification signal identifying a confirmed authentication or a non-confirmed authentication of the network device from the server;
when the identification signal corresponds to a signal confirming the authentication of the network device, downloading an application from the server;
receiving a specific key-event for executing executing a specific command, and optionally transmitting the received key-event to an add-on system manager; and
verifying a focused specific application, among at least one or more of currently executable applications, and transmitting the received key-event to the focused specific application.

11. The method of claim 10, wherein the step of downloading an application from the server further comprises:
receiving authentication data transmitted by a header of a downloaded application or by separate metadata; and
verifying whether or not the application can be executed normally.

12. In a method for controlling a network device processing at least one or more applications, the method for controlling the network device processing at least one or more applications comprising:
transmitting a signal requesting a first list for identifying at least one or more downloadable applications or requesting a second list for identifying at least one or more downloadable contents to a server;
receiving the first list or the second list from the server;
displaying the received first list or second list;
when a specific application is selected from the first list, or when a specific content is selected from the second list, transmitting a signal requesting the selected application or content to the server; and downloading the selected application or content from the server.

13. The method of claim 12, wherein the step of displaying the first list further comprises:
checking system requirements of the network device receiving the first list; and
marking only applications that can be executed by the network device based upon the checked information.

14. The method of claim 12, wherein the step of displaying the second list further comprises:
searching for applications that are already installed in the network device receiving the second list; and
marking only the contents that can be applied by the searched application.

15. The method of claim 12, wherein the step of requesting a first list or a second list, further comprises:
setting-up at least one or more filtering options.

16. The method of claim 12, wherein the filtering options includes at least one or more of an application title, a number of downloads, a number of recommendations, and a registration date.

17. The method of claim 15, wherein the first list or the second list received from the server comprises:
a sub list arranged based upon an information field, wherein the information field is determined by the filtering options.

18. In a method for controlling a network device processing at least one or more applications, the method for controlling the network device processing at least one or more applications comprising:
receiving a key-event for creating an applications list;
searching for an application that is already installed in the network device;
creating a list of the searched applications;
displaying the created applications list;
receiving an execution request on an application selected from the at least one or more applications listed in the applications list;
verifying whether or not the application requested to be executed can be executed normally by using metadata of the corresponding application; and
when it is verified that the corresponding application can be executed normally, executing the corresponding application.

19. The method of claim 18, wherein, the step of creating a list of the searched applications further comprises:
searching for contents already stored in the network device; and
creating a sub list respective to contents applicable by the corresponding applications, among the searched contents.

20. The method of claim 19, further comprising:
when a content indicated in the sub list is selected, verifying an application in which the selected content is used;
receiving a request for executing the verified application; and
processing the selected content in the application requested to be executed.
